# EUROPEAN PATENT APPLICATION

(11) **EP 3 170 409 A1**
(43) Date of publication of application: **24.05.2017**
(21) Application number: 15822238.0
(22) Date of filing: 16.07.2015
(51) Int. Cl.: A23L 15/00

(54) **NUTRITIONAL COMPOSITION**

(30) Priority: 17.07.2014 JP 2014146881
(71) Applicant: The Nisshin OilliO Group, Ltd., Tokyo 104-8285 (JP)
(72) Inventor: SAKURADA Miho, Yokosuka-shi Kanagawa 239-0832 (JP); SUYAMA Daisuke, Yokosuka-shi Kanagawa 239-0832 (JP)
(74) Representative: KATZAROV S.A.
(86) International application number: PCT/JP2015/070362
(87) International publication number: WO 2016/010102

(57) **Abstract**

The problem of the present invention is to provide a nutritional composition which is easy to consume without oily feeling, and from which the desired amount of energy can be obtained conveniently. The present invention is a nutritional composition containing fats, proteins, and sugars, wherein the energy per 100 g of the nutritional composition is 150-750 kcal, the ratio of fats to the total of proteins and sugars is 1.8 to 6.0, and a triacylglycerol having a C6-12 medium-chain fatty acid is included as a constituent fatty acid in an amount of 50% by weight or more of the fats.

## Description

### TECHNICAL FIELD

The present invention relates to a nutritional composition. More specifically, the present invention relates to a nutritional composition which is easy to consume without oily feeling, and from which the desired amount of energy can be obtained conveniently even when the nutritional composition has a significantly high ratio of lipid relative to the sum of protein and available carbohydrate (hereinafter also referred to as "sugar").

### BACKGROUND ART

Many biological species obtain the energy required to live mainly from carbohydrate, protein, and lipid. Accordingly, carbohydrate, protein, and lipid are called the three major nutrients.

Carbohydrate can be grouped into digestible available carbohydrate (sugar) and non-digestible dietary fiber. For example, available carbohydrate can be categorized into monosaccharide such as glucose, disaccharide such as sucrose, oligosaccharide such as oligosaccharide, and polysaccharide such as starch according to the number of sugar units. Dietary fiber, which is a general term for non-digestible ingredients which are not digested with digestive enzyme, is roughly grouped into water-soluble dietary fiber and insoluble dietary fiber.

Protein comprises amino acids bonded via the peptide linkage. For human, some amino acids (essential amino acids) cannot be synthesized in the body. These essential amino acids, therefore, need to be dietarily supplemented. Lipid is a general term for water-insoluble substances which are isolated from organisms. A representative example of lipid is a fat in which one molecule of glycerin is bonded to three molecules of fatty acid via the ester linkages. Lipid plays important roles in maintaining biological elements such as biological membranes.

Meanwhile, with regard to the amount of energy, lipid contains as much as energy of 9 kcal per gram while carbohydrate and protein each contain only 4 kcal per gram. Therefore, lipid is the most efficient energy source among the three major nutrients.

Carbohydrate, protein, and lipid are important energy sources essential for supporting our lives and physical activities as described above, and thus a balanced intake of these three major nutrients from diet is required. However, our eating habits recently have become excessively luxurious to the level of satiation. In addition, westernized diets have been increasingly popular, changing our diet to carbohydrate (available carbohydrate) based menu. As a result, we have been depending on carbohydrate (available carbohydrate) for the major energy source for a long time. Carbohydrate taken from diet is metabolized into available carbohydrate in the living body, and the available carbohydrate will be then distributed via the bloodstream to serve as an energy source in cells throughout the body. However, the available carbohydrate which remains unused will soon be converted into fats, which will be accumulated in the body.

Therefore, generally accepted is that an excessive intake of carbohydrate (available carbohydrate) is responsible for obesity and diabetes. Accordingly, diets having a limited amount of carbohydrate (available carbohydrate) intended for reducing the body weight, which may also be called a low-carbohydrate diet, have recently been proposed actively.

Moreover, the human can utilize other organic compounds, such as amino acid, fatty acid, and ketone body, as energy sources under certain special environments in addition to available carbohydrate. The above capability is acquired presumably because our ancestors were often in a starvation state. To date, attempts have been tried to treat certain diseases by taking advantage of the above capability which the human has acquired. For example, a diet in which the amounts of available carbohydrate and protein are reduced, but the amount of lipid is increased, i.e., the "ketone diet," has been proposed and used particularly in Europe and America as a diet for treating epilepsy patients. In the "ketone diet," ketone bodies resulted from decomposition of lipid are used as energy sources in cells. In general, increase in the amount of available carbohydrate relative to the amount of lipid may result in decreased generation of ketone bodies (ketogenicity) while the "ketone diet" in which the amount of lipid relative to the amount of available carbohydrate is increased may promote generation of ketone bodies. Here, ketone bodies refer to acetoacetic acid, 3-hydroxybutyric acid (β-hydroxybutyric acid), and acetone.

As described above, the "ketone diet" having low available carbohydrate and high lipid has been used to perform weight control for obesity and the like, or to treat epileptic seizure and the like. Furthermore, the "ketone diet" has been increasingly used for treating diseases such as senile dementia and Alzheimer-type dementia.

For example, Patent Document 1 describes use of a nutritional composition for controlling epileptic seizure in children, the nutritional composition containing protein, lipid, and digestible carbohydrate, and having 2520 to 3080 kilo joules of energy per 100 g of dry mass, in which the weight of the lipid relative to the sum of the protein and the digestible carbohydrate is 2.7 to 3.4 : 1, and the lipid comprises a large amount of polyunsaturated fatty acid such as linolenic acid.

Further, Patent Document 2 discloses that protein aggregation in the mammalian brain can be decreased by the ketone diet therapy to treat Alzheimer-type dementia.

However, the conventional "ketone diet" suffers from oily feeling and unpleasant consumability because a considerable amount of lipid is contained as compared with protein and available carbohydrate. This may disadvantageously prevent voluntary consumption of the ketone diet and long-term compliance of the ketone diet therapy. Accordingly, there have been demands for a nutritional composition which is easy to consume without oily feeing, and from which the desired amount of energy can be obtained conveniently even when it is a "ketone diet."
Patent Document 1: Japanese Unexamined Patent Application (Translation of PCT Application), Publication No. 2010-506587
Patent Document 2: Japanese Unexamined Patent Application (Translation of PCT Application), Publication No. 2008-542200

### DISCLOSURE OF THE INVENTION

### Problems to be Solved by the Invention

An object of the present invention is to provide a nutritional composition which is easy to consume without oily feeing, and from which the desired amount of energy can be obtained conveniently.

### Means for Solving the Problems

After conducting extensive studies to obtain such a nutritional composition, the present inventors surprisingly find that a nutritional composition which is easy to consume without oily feeing, and from which the desired amount of energy can be obtained conveniently even when the nutritional composition has a high ratio of lipid relative to the sum of available carbohydrate (sugar) and protein can be obtained by using a lipid comprising a large amount of a triacylglycerol having a C6-12 medium-chain fatty acid. Then the present invention has been completed.

That is, one aspect of the present invention can provide a nutritional composition containing lipid, protein, and available carbohydrate, in which the nutritional composition has 150 to 750 kcal of energy per 100 g of the nutritional composition, and the ratio of the lipid relative to the sum of the protein and the available carbohydrate is 1.8 to 6.0, and the lipid comprises 50 mass% or more of a triacylglycerol having a C6-12 medium-chain fatty acid as constituent fatty acids relative to the lipid.

One preferred aspect of the present invention can provide a nutritional composition, in which the lipid is one or more selected from liquified oils, solid oils, and powdered oils and fats.

One preferred aspect of the present invention can provide a nutritional composition, in which the lipid comprises only less than 15 mass% of linolenic acid and α-linoleic acid on the basis of fatty acid.

One preferred aspect of the present invention can provide a nutritional composition, in which the lipid comprises only less than 16 mass% of polyunsaturated fatty acid (a fatty acid having two or more unsaturated bonds) on the basis of fatty acid.

One preferred aspect of the present invention can provide a nutritional composition, in which the lipid comprises 20 to 100 mass% of saturated fatty acid on the basis of fatty acid.

One preferred aspect of the present invention can provide a nutritional composition, in which the lipid comprises 0 to 50 mass% of monounsaturated fatty acid on the basis of fatty acid.

One preferred aspect of the present invention can provide a nutritional composition, in which the constituent fatty acids of the triacylglycerol having medium chain fatty acids consist only of a C6-12 medium-chain fatty acid.

One preferred aspect of the present invention can provide a nutritional composition, in which the constituent fatty acids of the triacylglycerol having medium chain fatty acids consist only of a C8, 10 or 12 medium-chain fatty acid.

One preferred aspect of the present invention can provide a nutritional composition, comprising 0 to 25 mass% of the available carbohydrate, 0 to 40 mass% of the protein, and 15 to 80 mass% of the lipid in a final product.

One preferred aspect of the present invention can provide a nutritional composition, in which the ratio of the lipid relative to the sum of the protein and the available carbohydrate is 1.8 or more and less than 4.0.

One preferred aspect of the present invention can provide a nutritional composition, in which the ratio of the lipid relative to the sum of the protein and the available carbohydrate is 4.0 or more and less than 6.0.

One preferred aspect of the present invention can provide a nutritional composition, which is any of a gel-like food product, a solid food product, a powdered food product, or a liquid food product.

One preferred aspect of the present invention can provide a food product comprising the above nutritional composition. Effects of the Invention.

According to the present invention, a nutritional composition which is easy to consume without oily feeing, and from which the desired amount of energy can be obtained conveniently even when the nutritional composition comprises a large amount of lipid such as a ketone diet can simply be manufactured by using a large amount of a triacylglycerol having a C6-12 medium-chain fatty acid as constituent fatty acids. Further, use of medium chain fatty acids, which can contribute to improved nutritional support and physical endurance, enables not only easier consumability but also a simple intake in large amounts of required energy. As a result, the ketone diet therapy, which is otherwise disliked, can be continued without much difficulty.

Further, medium chain fatty acids intrinsically have antibacterial effects which can improve preservation stability at around room temperature (25ºC). Therefore, the present invention can provide a nutritional supplement which is convenient to carry around routinely, and can also be used as a portable food product.

### PREFERRED MODE FOR CARRYING OUT THE INVENTION

Below, the "nutritional composition" according to the present invention will be described step by step.

In the present invention, there is no particular limitation for the "nutritional composition" as long as it comprises predetermined amounts of lipid, protein, and available carbohydrate, and contains a predetermined amount of energy, and further has a ratio of the lipid (hereinafter referred to as the "ketone ratio") relative to the sum of the protein and the available carbohydrate within predetermined numerical ranges, and comprises a predetermined amount of a triacylglycerol having a C6-12 medium-chain fatty acid.

Specific forms of it include solid, semi-solid, and liquid forms and the like. Specific product forms include, for example, powdered food products such as a powder; solid food products such as cookies, doughnuts, and biscuits; gel-like food products such as pudding and jelly. Further, they include, for example, liquid food products obtained by dissolving the powdered food products in water. In particular, a case in which the nutritional composition is a gel-like food product is preferred because even elderly people can swallow it easily, and the amount of consumption can be checked visually, and the portability is good. Note that the nutritional composition according to the present invention may also be in a form of all-included one complete meal, but it is more preferably in a form of a supplement which may be consumed supplementarily along with an ordinary meal.

The "nutritional composition" according to the present invention preferably comprises 15 to 80 mass% of lipid, 0 to 40 mass% of protein, and 0 to 25 mass% of available carbohydrate in a final product, more preferably comprises 20 to 75 mass% of lipid, 0 to 30 mass% of protein, and 1 to 20 mass% of available carbohydrate, and even more preferably comprises 22 to 70 mass% of lipid, 0 to 20 mass% of protein, and 1 to 18 mass% of available carbohydrate. In addition to this, the above "nutritional composition" may also comprise sufficient minerals, vitamins and the like in order to prevent nutritional disorder. Note that these numbers in mass% are relative to 100 mass% of the nutritional composition as a final product.

The "nutritional composition" according to the present invention needs to contain relatively high energy so that required energy can simply be taken in a large amount. Specifically, the nutritional composition contains 150 to 750 kcal of energy per 100 g of the nutritional composition. Preferably, the nutritional composition has 200 to 730 kcal of energy per 100 g of the nutritional composition. More preferably, the nutritional composition has 220 to 710 kcal of energy per 100 g of the nutritional composition.

The "nutritional composition" according to the present invention needs to have a high ratio of lipid (hereinafter referred to as the "ketone ratio") relative to the sum of protein and available carbohydrate so that ketone bodies can be produced. Specifically, the ketone ratio is 1.8 to 6.0. Preferably, the ketone ratio is 2.5 to 5.9. More preferably, the ketone ratio is 3.0 to 5.9.

Note that the "nutritional composition" according to the present invention may be grouped into those having a ketone ratio of 1.8 to 4.0 and those having a ketone ratio of 4.0 to 6.0 in view of that traditional ketone diets have a ketone ratio of about 4.0. Note that even those having a ketone ratio of less than 4.0 may be useful for epilepsy patients can consume them under certain restrictions.

There is no particular limitation for the "protein" used in the present invention as long as it comprises a peptide having more than 8 amino acids. Examples of the protein include corn gluten, wheat gluten, soybean protein, wheat protein, milk protein, whey protein, animal protein (including collagen) which may be obtained from meat or fish meat, egg white, egg yolk and the like. For example, proteins from casein which has strong emulsifying capacity are preferably used. Moreover, all human essential amino acids, in particular lysine, leucine, methionine, and cysteine are preferably included as much as possible. Therefore, α-lactalbumin which contains these amino acids in large amounts is preferably included.

The amount of protein in a final nutritional composition is preferably 0 to 40 mass%, more preferably 0 to 30 mass%, and even more preferably 0 to 20 mass%.

Examples of the "available carbohydrate" used in the present invention include glucose, dextrin, lactose, sucrose, galactose, ribose, trehalose, starch, modified starch, starch syrup, powdered starch syrup and the like. Lactose, galactose, ribose and the like are preferably used because non-glucose available carbohydrates may reduce oxidation stress.

The amount of available carbohydrate in a final nutritional composition is preferably 0 to 25 mass%, more preferably 1 to 20 mass%, and even more preferably 1 to 18 mass%.

As the "lipid" used in the present invention, oils and fats are preferably used. Oils and fats include liquid oils, solid oils, and powdered oils and fats. One or more of them can be used. The amount of lipid in a final nutritional composition is preferably 15 to 80mass %, more preferably 20 to 75 mass%, and even more preferably 22 to 70 mass%.

Further, 50 mass% or more of the lipid in the present nutritional composition should be a triacylglycerol having a C6-12 medium-chain fatty acid as constituent fatty acids in order to obtain a nutritional composition which is easy to consume without oily feeling despite of its high lipid content. Further, the above triacylglycerol is preferably 70 mass% or more relative to the lipid in the above nutritional composition, more preferably 80 mass% or more, and even more preferably 90 mass% or more. Moreover, the above triacylglycerol preferably accounts for all of the lipid (100 mass%) contained in the nutritional composition according to the present invention.

Note that in the present invention, lipid derived from raw materials other than the lipid to be blended is also included in calculation. For example, when cocoa powder, which has a lipid content of about 22 mass%, is blended in a nutritional composition, the amount of lipid corresponding to that amount is to be included in the nutritional composition. When almond powder, which has a lipid content of about 54 mass%, is blended in a nutritional composition, the amount of lipid corresponding to that amount is to be included in the nutritional composition.

As described above, the lipid in the nutritional composition according to the present invention comprises a triacylglycerol having a C6-12 medium-chain fatty acid as constituent fatty acids. The triacylglycerol may consist only of a C6-12 medium-chain fatty acid as constituent fatty acids, or may comprise triacylglycerol with mixed acid groups including a C6-12 medium-chain fatty acid as constituent fatty acids. Here, there is no particular limitation for the bonding position of each medium chain fatty acid to the glycerin. Further, when a triacylglycerol with mixed acid groups are used, some of the constituent fatty acids may comprises a fatty acid other than those having C6-12, for example, may comprise a long chain fatty acid having more than C12.

Further, the lipid used in the present invention may be a mixture in which oils and fats comprising two or more different molecular species were mixed, such as a mixture of trioctanoyl glycerol and tridecanoyl glycerol, for example. Here, the C6-12 medium-chain fatty acid is preferably straight chain saturated fatty acids.

According to another definition, a triacylglycerol in which at least one of the three fatty acids is a C6-12 medium-chain fatty acid may account for 50 mass% or more of the lipid in the present invention. Therefore, the total amount of medium chain fatty acids contained in the oils and fats of the lipid is preferably 10 mass% to 100 mass% in terms of fatty acid, more preferably 25 to 100 mass%, and even more preferably 40 to 100 mass%.

As the triacylglycerol comprising medium chain fatty acids to be contained in the nutritional composition according to the present invention, a triacylglycerol in which the constituent fatty acids consist only of a C6-12 medium-chain fatty acid (hereinafter also referred to as an "MCT") is preferred, and an MCT in which the constituent fatty acids consist only of a C8, 10, or 12 medium-chain fatty acid is more preferred.

A MCT to be contained in the lipid of the nutritional composition according to the present invention can be manufactured by the publicly known method. For example, it is manufactured by heating a C6-12 medium-chain fatty acid and glycerol to 120 to 180°C to perform dehydration condensation in the presence of catalyst, preferably in the absence of catalyst, or preferably under reduced pressure.

Any types of edible oils (liquefied oils) may be used for the nutritional composition according to the present invention as long as the content of lipid and the content of a triacylglycerol comprising a C6-12 medium-chain fatty acid satisfy the aforementioned specific ranges. In addition to medium-chain fatty acid oil (MCT), they include, for example, "yashi" oil (coconut oil), palm kernel oil, palm oil, fractionated palm oil (palm olein, palm super olein, and the like), shea butter, fractionated shea oil, sal butter, fractionated sal oil, illipe butter, soybean oil, rapeseed oil, cotton seed oil, safflower oil, sunflower oil, rice oil, corn oil, sesame oil, olive oil, milk fat, cocoa butter, and the like, and mixed oils thereof, hydrogenated oils thereof, fractionated oils thereof, transesterified oils thereof, and the like. One or more of them can be used. Among these, "yashi" oil (coconut oil) which contains a large amount of lauric acid (C12:0) may suitably be used as the lipid in the present invention.

As the "lipid" in the present invention, solid oils and powdered oils and fats are also preferably used as well as the above liquefied oils. Solid oils include, for example, margarine, shortening and the like. Margarine is a processed food product, which can be obtained by adding fermented milk, salt, and vitamins to refined oils and fats, and emulsifying and kneading them together, and it includes water, seasonings and the like other than the oils and fats. The lipid content of margarine in the present invention is calculated after excluding secondary materials such as water, fermented milk, and seasoning contained in the margarine. Hydrogenerated vegetable oils and fats and transesterified oils and fats are often used for margarine or fat spread as oil phase components, and those containing a triacylglycerol having a C6-12 medium-chain fatty acid as constituent fatty acids may suitably be used. Examples of such a product include RISETTA SOFT, a product from Nisshin Oillio Group, Ltd.

Further, shortening refers to oils and fats for kneading which are in a semi-solid (cream-like) form at ordinary temperature, and made from vegetable oils and fats such as soybean oil and corn oil and animal oils and fats. Unlike emulsified products such as margarine and butter, shortening is generally a tasteless and odorless white material, and does not contain water and milk components, and about 100% of it comprises oils and fats components.

Powdered oils and fats may be manufactured by any method of the spray method, the grinding method, or the coating method through steps of heat-drying, cooling solidification, freeze drying, microencapsulation and the like. In a case of a liquid oil with a low melting point, powdered oils and fats can be manufactured by mixing an aqueous phase with an oil phase, and spray drying the resulting O/W type emulsified product. In a case of solid oils and fats with a high melting point, powdered oils and fats can be manufactured by, for example, cooling solidification. Available carbohydrate and protein may sometimes be used as excipients in such powdered oils and fats. Therefore, the powdered oils and fats itself may serve as the "nutritional composition" according to the present invention. Note that preferred powdered oils and fats for the present invention include, for example, a Nissin MCT Powder, a product from Nisshin OilliO Group, Ltd.

The lipid component may contain diacylglycerol, monoacylglycerol, phospholipid, lysophospholipid, cholesterol, and glycolipid in addition to triacylglycerol. When about 97% of the lipid is triacylglycerol, a good nutritional composition can be obtained in terms of efficacy, safety, and taste. Some of triacylglycerol may be replaced with phospholipid, lysophospholipid, diacylglycerol, monoacylglycerol to improve digestibility (development of conditions such as diarrhea can be prevented). For this reason, 10 mass%, preferably up to 20 mass% of the lipid is preferably replaced with phospholipid, lysophospholipid, diacylglycerol, monoacylglycerol. However, in order to prevent a too high concentration of phosphorus, the amount of phospholipid is preferably less than 14 mass% of the lipid, preferably less than 8 mass%.

In order to reduce oxidation and achieve easy consumability, the content of linolenic acid and α-linoleic acid in the "nutritional composition" according to the present invention is preferably reduced as much as possible. The amount of linolenic acid and α-linoleic acid is preferably less than 15 mass% of the lipid on the basis of fatty acid. Note that linolenic acid and α-linoleic acid are preferably included so as to provide 14% or less of energy contained in the "nutritional composition" according to the present invention (a fatty acid with 37.8 kJ/g may be used).

The amount of polyunsaturated fatty acid (a fatty acid with two or more unsaturated bonds) in the "nutritional composition" according to the present invention is preferably less than 16 mass% of the lipid on the basis of fatty acid in order to reduce oxidation and achieve easy consumability. The lipid component may contain ω3- and ω6-fatty acids other than α-linoleic acid, but the amount of these fatty acids is preferably 2.0 mass% or less of the lipid. The lipid component may also contain arachidonic acid, but the amount of it is preferably 1.0 mass% or less of the lipid. Note that the amount of trans fatty acids contained in the lipid is 20 mass% or less of the lipid, preferably 0 to 10 mass%, and more preferably 0.2 to 4.0 mass% on the basis of fatty acid.

The amount of saturated fatty acids in the "nutritional composition" according to the present invention is preferably increased as much as possible in order to shape the product form and achieve easy consumability. The amount of saturated fatty acids is 20 to 100 mass% of the lipid on the basis of fatty acid, preferably 25 to 100 mass%, and more preferably 30 to 100 mass%. The carbon numbers of saturated fatty acids are 8 to 24. Among saturated fatty acids, caprylic acid (C8:0), capric acid (C10:0), or lauric acid (C12:0) is preferably included. Therefore, these fatty acids preferably account for 50 to 100 mass% of the lipid on the basis of fatty acid, more preferably 70 to 100 mass%, and even more preferably 80 to 100 mass%.

The amount of monounsaturated fatty acids is 0 to 50 mass% of the lipid, preferably 10 to 45 mass%, and more preferably 15 to 40 mass% on the basis of fatty acid in order to shape the product form and achieve easy consumability.

The followings may appropriately be blended as the "other raw materials" used in the present invention, if desired: for example, almond powder, cocoa powder, chocolate, caramel, cheese, nuts, and honey; processed goods such as fruit paste, fruit puree, vegetable paste, and vegetable puree; emulsifying agents such as polyglycerin fatty acid ester, sucrose fatty acid ester, sorbitan fatty acid ester, monoglyceride, and organic acid monoglyceride; vitamins such as vitamin A, vitamin B, vitamin E, and vitamin C; minerals such as iron, calcium, and magnesium; milk components such as whole milk powder, skim milk powder, milk powder, and creaming powder; gelatinizing agents such as gellan gum, xanthan gum, and agar; dietary fibers such as indigestible dextrin, polydextrose, carrageenan, and cellulose; sugar alcohols such as erythritol; sweetening agents such as sucralose, thaumatin, and neotame; organic acids such as succinic acid, malic acid, and citric acid; various seasoning agents such as salt and seasoning; various flavors such as flavoring agents; inflating agents such as sodium bicarbonate and baking powder; coloring agents; water; cow's milk; soybean milk; and the like.

Further, food products comprising the nutritional composition according to the present invention are within the scope of the present invention. They include, for example, food products in which cream, jam, marshmallow, bean paste and the like are wrapped or sandwiched by the nutritional composition. Further, they include food products in which chocolate, sugar, egg white, soy sauce, oils and fats, and the like are applied or coated on a surface of the nutritional composition to give complex tastes.

Meanwhile, the "ketone diet therapy" is developed to mimic a starvation state without decreasing calories, and traditionally used to treat epilepsy (seizure) in human. Although the mechanism why the ketone diet therapy is effective for treating epilepsy is yet to be elucidated, the phenomenon itself has been known for long time (since the 5th century B.C.). In the 1920s, Wilder et al. proposed the concept of pro-ketone and anti-ketone. Then the ketone diet (Today's traditional ketone diet) was developed in which available carbohydrate and protein are reduced as much as possible in order to promote production of ketone as much as possible, and about 90% of its calories comes from lipid. In the 1930s, the ketone diet went out of use because an antiepileptic drug was developed. However, it has been revisited again since 2000 because its efficacy for intractable epilepsy has been recognized. When available carbohydrate and protein are restricted, signaling for insulin is decreased, resulting in promoted use of fatty acid to induce production of ketone bodies. This can increase the concentration of ketone bodies in blood to maintain the ketosis state for a long period of time. The ketone diet therapy can be characterized as described above.

In the ketone diet therapy, a large amount of lipid is consumed, and sufficient calories can be obtained, but a kind of starvation state is formed due to the low level of insulin signaling. Further, the activity of lipoprotein lipase in non-adipocyte tissues is increased due to the low level of insulin signaling, and an intake of free fatty acid and oxidation of fatty acid in the muscle and liver tissues are stimulated. Oxidation of fatty acid in the liver may lead to a high level of acetyl CoA, which is used to produce ketone bodies. The liver has no enzyme for metabolizing ketone bodies. As a consequence, ketone bodies are released into the blood stream, and are used in cells of peripheral tissues. Further, when the concentration of ketone bodies in blood is increased, use of glucose is decreased, and thus low insulin signaling is maintained.

The "ketone diet therapy" as described above may be used to treat certain types of diseases. Potential treatment targets include, for example, mental problems such as seizure due to idiopathic epilepsy, weight loss, obsessive-compulsive disorder, and separation anxiety; muscular metabolism such as fatigue and infirmity; type 2 diabetes mellitus due to insulin secretion defect or insulin deficiency; and the like. Recently, ketone bodies have been found to serve as energy sources for brain activities in the place of available carbohydrate. This suggests that the ketone diet therapy may also be effective for treating certain neurodegenerative diseases, for example, Parkinson's disease, Alzheimer disease and the like. Moreover, a treatment method to starve cancer cells that cannot effectively utilize ketone bodies has been conceived in which a diet with restricted available carbohydrate is performed to use a ketone bodies as an energy source exclusively. This is based on the insight that cancer cells consume a large amount of available carbohydrate as an energy source.

Therefore, the "nutritional composition" according to the present invention can be effective for improving the frequency of seizure in epilepsy patients and for alleviating the severity of seizure. In particular, it appears to be effective for an epilepsy patient who does not have congenital metabolic abnormality. It also appears to be less likely to cause adverse effects such as growth retardation, metabolic acidosis, compromised immune function, kidney problems, and constipation.

Moreover, it can effectively be used as a diet applicable to weight control or weight management for adults and other obese persons having a BMI of more than 25, in particular for obese persons suffering from metabolic syndrome or insulin resistance. Note that the "nutritional composition" according to the present invention is particularly effective when it is used in combination with other different nutriments (diets) instead of being used as a single nutriment. Further, it may be effective as a therapeutic food product for patients suffering from senile dementia and Alzheimer-type dementia, and for patients suffering from certain types of cancer. It may also be effective for preventing these diseases. Taken together, the ketosis state induced by the ketone diet therapy can limit use of glucose, leading to a state of low insulin signaling. The "nutritional composition" according to the present invention can effectively be used to treat patients having diseases affected by these metabolic changes. It can also effectively be used to prevent such diseases.

### EXAMPLES

Next, the present invention will be described in more detail with reference to Examples and Comparative Examples, but the present invention shall not in any way be limited to these.

The unit "%" as used hereinafter refers to "mass%" unless otherwise stated.

Further, the contents of lipid, protein, and available carbohydrate are calculated as mass% relative to 100 mass% of the nutritional composition.

Moreover, energy is calculated as kilocalories per 100 g of the nutritional composition. Furthermore, the "ketone ratio" is calculated by the expression "lipid / (protein + available carbohydrate)" based on the contents of lipid, protein, and available carbohydrate contained in the nutritional composition.

### <Analytical method>

The content of a triacylglycerol was measured in accordance with AOCS Ce5-86.

The content of each fatty acid was measured in accordance with AOCS Celf-96.

Hereafter, a triacylglycerol having a C6-12 medium-chain fatty acid are abbreviated as "MTG." Further, among these, a triacylglycerol in which the constituent fatty acids consist only of a C6-12 medium-chain fatty acid is abbreviated as an "MCT."

### <Oils and fats used>

[MCT 1]: An MCT (an in-house product C10R from Nisshin OilliO Group, Ltd.) in which the fatty acids of the triacylglycerol were n-octanoic acid (C8) and n-decanoic acid (C10) with a mass ratio of 30:70 was used as MCT 1.
[MCT 2]: An MCT (an in-house product O.D.O. from Nisshin OilliO Group, Ltd.) in which the fatty acids of the triacylglycerol were n-octanoic acid (C8) and n-decanoic acid (C10) with a mass ratio of 75:25 was used as MCT 2.
[Vegetable oils and fats 1]: A hardened coconut oil (Nisshin OilliO Group, Ltd., the content of medium chain fatty acids among the fatty acids of the triacylglycerol was 12.3 mass% (breakdown: the content of n-octanoic acid was 8.0 mass%; the content of n-decanoic acid was 4.3 mass%); the content of MTG was 53.2 mass%; the content of MCT was 0 mass%) was used as Vegetable oils and fats 1.
[Vegetable oils and fats 2]: An extremely hardened high-erucic rapeseed oil (Yokozeki Oil and Fat Industries Co., Ltd., the content of MTG was 0 mass%) was used as Vegetable oils and fats 2.
[Vegetable oils and fats 3]: A rapeseed oil (Nisshin OilliO Group, Ltd., the content of MTG was 0 mass%; the content of saturated fatty acid was 6 mass%; the content of monounsaturated fatty acid was 62 mass%; the content of polyunsaturated fatty acid was 30 mass%; the content of oleic acid was 60 mass%; the content of linolenic acid was 10 mass%) was used as Vegetable oils and fats 3.
[Vegetable oils and fats 4]: An intermediate melting point fraction of palm (Nisshin OilliO Group, Ltd., the content of MTG was 0 mass%) was used as Vegetable oils and fats 4.
[Transesterified oil 1]: A transesterified oil in which a mixed oil of 50 parts by mass of an extremely hardened palm stearin oil and 50 parts by mass of an extremely hardened palm kernel olein oil was chemically transesterificated (the content of medium chain fatty acids among the fatty acids of the triacylglycerol was 3.2 mass% (breakdown: n-octanoic acid was 2.0 mass%; the content of n-decanoic acid was 1.2 mass%); the content of MTG was 13.2 mass%; the content of MCT was 0 mass%) was used as Transesterified oil 1.
[Transesterified oil 2]: A transesterified oil in which palm olein was chemically transesterified (the content of MTG was 0 mass%) was used as Transesterified oil 2.

### <Preparation of margarine>

Oil and aqueous phases were prepared according to the compositions shown in Table 1, and then rapidly cooled for plasticization with a combinator by the conventional method to prepare a medium chain margarine and a long chain margarine. The contents of MTG in the lipids were shown in Table 1. Note that the content of MTG in the lipid was computed from the value obtained by dividing the sum of the contents of MTG contained in the oils and fats used by the net content of lipid after excluding an emulsifying agent, water, and salt.

**[Table 1]**

| Table1 Composition of margarine and content of MT | | G (Unit: mass%) | |
|---|---|---|---|
| | | Medium chain margarine | Long chain margarine |
| Oil phase | MCT1 | 41.7 | - |
| | Vegetable oils and fats1 | 32.9 | - |
| | Vegetable oils and fats2 | 0.5 | 0.5 |
| | Vegetable oils and fats3 | - | 41.7 |
| | Vegetable oils and fats4 | - | 20.4 |
| | Transesterified oil 1 | 8.3 | 8.3 |
| | Transesterified oil 2 | - | 12.5 |
| | Emulsifying agent | 0.4 | 0.4 |
| Aqueous phase | Water | 16.0 | 16.0 |
| | Salt | 0.2 | 0.2 |
| Total | | 100.0 | 100.0 |
| MTG content in lipid | | 72.3% | 1.3% |

### [Example 1]

### <Manufacture of powdered oils and fats>

Powdered oils and fats of Example 1 and Comparative Example 1 were manufactured by the conventional method according to the compositions shown in Table 2 below. Specifically, MCT 2 or Vegetable oils and fats 3 shown in the compositions below was first used as an oil phase, and then thoroughly mixed with an aqueous phase prepared by adding water to modified starch and dextrin to produce an O/W type emulsified material. Then the above emulsified material was dried with hot air with a spray drying method to obtain powdered oils and fats. Note that hereinafter, the powdered oils and fats from Example 1 are called an "MCT powder," and the powdered oils and fats from Comparative Example 1 are called an "LCT powder."

**[Table 2]**

| [Table2] Composition and evaluation of powdered oils and fats | | | | |
|---|---|---|---|---|
| | Example 1 | | Comparative Example 1 | |
| Composition of raw materials | (g) | (%) | (g) | (%) |
| MCT 2 | 75.0 | 75.0 | | |
| Vegetable oils and fats 3 | | | 75.0 | 75.0 |
| Modified starch | 10.0 | 10.0 | 10.0 | 10.0 |
| Dextrin | 15.0 | 15.0 | 15.0 | 15.0 |
| Total | 100.0 | 100.0 | 100.0 | 100.0 |
| MTG content in lipid | 100% | | 0% | |
| Lipid | 74.6 | | 74.6 | |
| Protein | 0 | | 0 | |
| Available carbohydrate | 23.8 | | 23.8 | |
| Energy | 769.2 | | 769.2 | |
| Ketone ratio | 3.1 | | 3.1 | |

| Evaluation results | | | | |
|---|---|---|---|---|
| Oily feeling | Good | | Poor | |
| Consumability | Good | | Poor | |

### [Example 2]

### <Manufacture of almond cookies>

Almond cookies of Example 2 and Comparative Example 2 were manufactured by the conventional method according to the compositions shown in Table 3 below. Specifically, the MCT powder or LCT powder, a sweetening agent SUGAR CUT (trade mark) (Asadaame Co., Ltd.), an almond powder, egg white, and sodium bicarbonate were added to and mixed thoroughly with a medium chain margarine or long chain margarine according to the compositions shown below to obtain a cookie dough. It was rolled to a thickness of 3 mm, and cut out with a 3 cm round cutter, and then baked for 15 minutes in a 150ºC oven to produce cookies.

**[Table 3]**

| [Table3] Composition and evaluation of cookie | | | | |
|---|---|---|---|---|
| | Example 2 | | Comparative Example 2 | |
| Composition of raw materials | (g) | (%) | (g) | (%) |
| MCT powder | 100 | 47.9 | - | - |
| LCT powder | - | - | 100 | 47.9 |
| Medium chain margarine | 25.0 | 12.0 | - | - |
| Long chain margarine | - | - | 25.0 | 12.0 |
| Sweetening agent | 15.0 | 0.1 | 15.0 | 0.1 |
| Almond powder | 30.0 | 14.4 | 30.0 | 14.4 |
| Egg white | 37.5 | 18.0 | 37.5 | 18.0 |
| Sodium bicarbonate | 1.25 | 0.6 | 1.25 | 0.6 |
| Total | 208.75 | 100.0 | 208.75 | 100.0 |
| MTG content in lipid | 56.6% | | 0.2% | |
| Lipid | 59.3 | | 59.3 | |
| Protein | 5.1 | | 5.1 | |
| Available carbohydrate | 22.3 | | 22.3 | |
| Energy | 646.3 | | 646.3 | |
| Ketone ratio | 2.2 | | 2.2 | |

| Evaluation results | | | | |
|---|---|---|---|---|
| Oily feeling | Very Good | | Bad | |
| Consumability | Very Good | | Poor | |

### [Example 3]

### <Manufacture of improved almond cookies>

Improved almond cookies of Example 3 and Comparative Example 3 were produced according to the compositions shown in Table 4 below. In order to increase the ketone ratio, MIRASEE (trade mark) (DSP Gokyo Food & Chemical Co., Ltd.) was used as a sweetening agent according to the compositions shown in Table 4 below in the place of SUGAR CUT (trade mark) in the compositions shown in Table 3 of Example 2 above. Other components were adjusted according to this change. Others were performed as in Example 2.

**[Table 4]**

| [Table4] Composition and evaluation of cookie | | | | |
|---|---|---|---|---|
| | Example 3 | | Comparative Example 3 | |
| Composition of raw materials | (g) | (%) | (g) | (%) |
| MCT powder | 100 | 53.0 | - | - |
| LCT powder | - | - | 100 | 53.0 |
| Medium chain margarine | 25.0 | 13.2 | - | - |
| Long chain margarine | - | - | 25.0 | 13.2 |
| Sweetening agent | 0.10 | 0.05 | 0.10 | 0.05 |
| Almond powder | 37.5 | 19.9 | 37.5 | 19.9 |
| Egg white | 25.0 | 13.2 | 25.0 | 13.2 |
| Sodium bicarbonate | 1.25 | 0.7 | 1.25 | 0.7 |
| Total | 188.85 | 100.0 | 188.85 | 100.0 |
| MTG content in lipid | 62.5% | | 0.2% | |
| Lipid | 67.9 | | 67.9 | |
| Protein | 5.7 | | 5.7 | |
| Available carbohydrate | 16.3 | | 16.3 | |
| Energy | 703.3 | | 703.3 | |
| Ketone ratio | 3.1 | | 3.1 | |

| Evaluation results | | | | |
|---|---|---|---|---|
| Oily feeling | Very Good | | Bad | |
| Consumability | Very Good | | Poor | |

### [Example 4]

### <Manufacture of puddings>

Puddings of Example 4 and Comparative Example 4 were manufactured by the conventional method according to the compositions shown in Table 5 below. Specifically, agar was dissolved in boiling water, and then raw materials other than a puree or paste and a lipid were added and dissolved with stirring. Subsequently, the puree or paste was added and mixed to prepare an uniformly mixed liquid, to which the lipid was then added. After preliminary emulsification was performed with a homomixer, homogenation was further performed with a homogenizer. Plastic containers were each filled with 40 g of the emulsified mixed liquid obtained in this way, and then sealed, and were subjected to retort sterilization (at 121.1ºC for 25 minutes), and then cooled to obtain pudding.

**[Table 5]**

| [Table5] Composition and evaluation of pudding | | | | |
|---|---|---|---|---|
| | Example 4 | | Comparative Example 4 | |
| Composition of raw materials | (g) | (%) | (g) | (%) |
| MCT 1 | 6.80 | 17.0 | - | - |
| Vegetable oils and fats 3 | 2.60 | 6.50 | 9.40 | 23.5 |
| Emulsifying agent | 0.18 | 0.45 | 0.18 | 0.45 |
| Sugar | 2.00 | 5.00 | 2.00 | 5.00 |
| Sweetening agent | 0.11 | 0.27 | 0.11 | 0.27 |
| Gelatinizing agent | 0.87 | 2.18 | 0.87 | 2.18 |
| Powder starch syrup | 1.60 | 4.00 | 1.60 | 4.00 |
| Trehalose | 0.80 | 2.00 | 0.80 | 2.00 |
| Citric acid | 0.04 | 0.10 | 0.04 | 0.10 |
| Fruit puree | 4.00 | 10.0 | 4.00 | 10.0 |
| Flavoring agent | 0.12 | 0.30 | 0.12 | 0.30 |
| Water | 20.88 | 52.2 | 20.88 | 52.2 |
| Total | 40.00 | 100.0 | 40.00 | 100.0 |
| MTG content in lipid | 72.3% | | 0% | |
| Lipid | 23.8 | | 23.8 | |
| Protein | 0 | | 0 | |
| Available carbohydrate | 12.5 | | 12.5 | |
| Energy | 275.0 | | 275.0 | |
| Ketone ratio | 1.9 | | 1.9 | |

| Evaluation results | | | | |
|---|---|---|---|---|
| Oily feeling | Very Good | | Poor | |
| Consumability | Very Good | | Poor | |

### [Example 5]

### <Manufacture of improved puddings>

Improved puddings of Example 5 and Comparative Example 5 were produced according to the compositions shown in Table 6 below. In order to increase the ketone ratio, proteins (casein Na, whey protein, collagen) which were not added according to the compositions shown in Table 5 above of Example 4 were used, and sugar, trehalose, citric acid, and a fruit puree were removed according to the compositions shown in Table 6 below. Other components were adjusted accordingly. Others were performed as in Example 4.

**[Table 6]**

| [Table6] Composition and evaluation of pudding | | | | |
|---|---|---|---|---|
| | Example 5 | | Comparative Example 5 | |
| Composition of raw materials | (g) | (%) | (g) | (%) |
| MCT 1 | 6.80 | 17.0 | | |
| Vegetable oils and fats 3 | 3.20 | 8.0 | 10.0 | 25.0 |
| Emulsifying agent | 0.20 | 0.5 | 0.20 | 0.5 |
| Casein Na | 0.80 | 2.0 | 0.80 | 2.0 |
| Whey protein | 0.40 | 1.0 | 0.40 | 1.0 |
| Collagen | 0.20 | 0.5 | 0.20 | 0.5 |
| Gelatinizing agent | 0.74 | 2.02 | 0.74 | 2.02 |
| Dietary fiber | 0.20 | 0.50 | 0.20 | 0.50 |
| Sweetening agent | 0.06 | 0.15 | 0.06 | 0.15 |
| Flavoring agent | 0.18 | 0.46 | 0.18 | 0.46 |
| Coloring agent | 0.04 | 0.10 | 0.04 | 0.10 |
| Water | 27.18 | 67.77 | 27.18 | 67.77 |
| Total | 40.0 | 100.0 | 40.0 | 100.0 |
| MTG content in lipid | 68.0% | | 0% | |
| Lipid | 25.4 | | 25.4 | |
| Protein | 3.2 | | 3.2 | |
| Available carbohydrate | 1.2 | | 1.2 | |
| Energy | 248.7 | | 248.7 | |
| Ketone ratio | 5.8 | | 5.8 | |

| Evaluation results | | | | |
|---|---|---|---|---|
| Oily feeling | Very Good | | Poor | |
| Consumability | Very Good | | Poor | |

### <Evaluation of nutritional compositions>

The nutritional compositions from Examples and Comparative Examples manufactured as described above were subjected to sensory evaluation in accordance with the following evaluation method.

### <Method of evaluating nutritional compositions>

### (1) Method of evaluating oily feeling

A panel of 10 trained personnels performed general evaluation in accordance with the following criteria.
Very Good: No oily feeling
Good: Slightly oily
Poor: Somewhat oily
Bad: oily

### (2) Method of evaluating consumability

A panel of 10 trained personnels performed general evaluation in accordance with the following criteria.
Very Good: very much easy to eat
Good: easy to eat
Poor: less easy to eat
Bad: not easy to eat

As clearly shown in Tables 2 to 6, nutritional compositions which are easy to consume without oily feeing, and from which the desired amount of energy can be obtained conveniently were able to be manufactured by using a lipid in which a triacylglycerol having a C6-12 medium-chain fatty acid as constituent fatty acids accounted for 50 mass% or more of the total lipid. In particular, the improved versions from Examples 3 and 5 each have a sufficiently high ketone ratio, and thus can likely lead to favorable generation of ketone bodies. Therefore, they can preferably be used for the ketone diet therapy.

## Claims

1. A nutritional composition containing lipid, protein, and available carbohydrate (sugar), wherein the nutritional composition has 150 to 750 kcal of energy per 100 g of the nutritional composition, and the ratio of the lipid relative to the sum of the protein and the available carbohydrate is 1.8 to 6.0, and the lipid comprises 50 mass% or more of a triacylglycerol having a C6-12 medium-chain fatty acid as constituent fatty acids relative to the lipid.

2. The nutritional composition according to claim 1, wherein the lipid is one or more selected from liquefied oils, solid oils, and powdered oils and fats.

3. The nutritional composition according to claim 1 or 2, wherein the lipid comprises only less than 15 mass% of linolenic acid and α-linoleic acid on the basis of fatty acid.

4. The nutritional composition according to any one of claims 1 to 3, wherein the lipid comprises only less than 16 mass% of polyunsaturated fatty acid (a fatty acid having two or more unsaturated bonds) on the basis of fatty acid.

5. The nutritional composition according to any one of claims 1 to 4, wherein the lipid comprises 20 to 100 mass% of saturated fatty acid on the basis of fatty acid.

6. The nutritional composition according to any one of claims 1 to 5, wherein the lipid comprises 0 to 50 mass% of monounsaturated fatty acid on the basis of fatty acid.

7. The nutritional composition according to any one of claims 1 to 6, wherein the constituent fatty acids of the triacylglycerol having medium chain fatty acids consist only of a C6-12 medium-chain fatty acid.

8. The nutritional composition according to any one of claims 1 to 7, wherein the constituent fatty acids of the triacylglycerol having medium chain fatty acids consist only of a C8, 10 or 12 medium-chain fatty acid.

9. The nutritional composition according to any one of claims 1 to 8, comprising 0 to 25 mass% of the available carbohydrate, 0 to 40 mass% of the protein, and 15 to 80 mass% of the lipid in a final product.

10. The nutritional composition according to any one of claims 1 to 9, wherein the ratio of the lipid relative to the sum of the protein and the available carbohydrate is 1.8 or more and less than 4.0.

11. The nutritional composition according to any one of claims 1 to 10, wherein the ratio of the lipid relative to the sum of the protein and the available carbohydrate is 4.0 or more and less than 6.0.

12. The nutritional composition according to any one of claims 1 to 11, wherein the nutritional composition is any of a gel-like food product, a solid food product, a powdered food product, or a liquid food product.

13. A food product comprising the nutritional composition according to any one of claims 1 to 12.
